# NEUE EUROPÄISCHE PATENTSCHRIFT

(11) **EP 1 886 861 B2**
(45) Veröffentlichungstag und Bekanntmachung des Hinweises auf die Entscheidung über den Einspruch: **07.10.2020**
(45) Hinweis auf die Patenterteilung: 26.10.2011
(21) Anmeldenummer: 07015157.6
(22) Anmeldetag: 02.08.2007
(51) Int. Cl.: B60K 7/00, F16H 39/40

(54) **Quersperre für MAN-Hydrodrive**
Differential for MAN hydrodrive
Différentiell pour MAN-Hydrodrive

(30) Priorität: 11.08.2006 AT 13502006
(43) Veröffentlichungstag der Anmeldung: 13.02.2008
(73) Patentinhaber: MAN Truck & Bus Österreich GesmbH, 4400 Steyr (AT)
(72) Erfinder: Hörmansdorfer, Otmar, 1220 Wien (AT)
(74) Vertreter: Kotitschke, Bernd

(56) Entgegenhaltungen:
- DE-A1- 2 452 835
- DE-B1- 2 326 857
- FR-A1- 2 859 671
- US-A- 3 864 910
- US-A- 4 069 886
- US-A- 4 140 196
- US-A- 4 236 595

## Beschreibung

Die Erfindung bezieht sich auf ein Kraftfahrzeug, nämlich Nutzfahrzeug, mit mindestens einer lenkbaren Vorderachse und mindestens einer Hinterachse, von denen mindestens eine Hinterachse über einen mechanischen Antriebsstrang antreibbar ist und mit einem, einen Steuerblock aufweisenden Hydraulikkreislauf, der zur Speisung von hydraulischen Einzelradmotoren vorgesehen ist. Die Einzelradmotoren sind an wenigstens zwei lenkbaren Vorderrädern mindestens einer der Vorderachsen angeordnet und dienen zu deren Antrieb. In dem Hydraulikkreislauf für die wenigstens zwei lenkbaren Vorderräder der Vorderachsen ist ein als Sperrdifferential wirkender, durch den Steuerblock geregelter Druckölverteiler angeordnet ist.

Aus der DE 199 61 960 A1 ist eine Antriebseinrichtung für Kraftfahrzeuge, insbesondere für Nutzfahrzeuge bekannt, die eine mechanische Antriebsverbindung zwischen einem Fahrzeugmotor und den Fahrzeugrädern einer der Fahrzeugachsen aufweist. Die Antriebseinrichtung weist darüber hinaus einen zu- und abschaltbaren Zusatzantrieb für die Fahrzeugräder wenigstens einer anderen Fahrzeugachse auf, der als hydrostatischer Einzelradantrieb ausgebildet ist und bei dem den Antriebsrädern jeweils als Zusatzantriebsmotor ein Hydromotor zugeordnet ist. Der Hydromotor ist mit wenigstens einer, vom Fahrzeugmotor angetriebenen Hydropumpe treibbar verbunden, wobei eine unabhängig von der Hydropumpe vom Fahrzeugmotor oder einem anderem fahrzeuginternen Energieträger antreibbare Speisepumpe vorgesehen ist. Der hydrostatische Einzelradantrieb, auf den sich die Druckschrift bezieht, hat die Eigenschaft, dass der Hydraulikkreislauf die Antriebsleistung im schlechtesten Fall auf das jenige hydrostatisch angetriebene Rad lenkt, das die geringste Bodenhaftung aufweist. Wünschenswert wäre deshalb, die Antriebseinrichtung dergestalt weiterzuentwickeln, dass der Antrieb über die hydrostatisch angetriebenen Einzelräder auch bei teilweisem oder vollständigem Traktionsverlust eines der Einzelräder erhalten bleibt.

Aus der US 4 140 196 A ist ein Hilfsantrieb für die nicht angetriebenen lenkbaren Räder eines vierradgetriebenen Fahrzeugs bekannt, bei dem Hydraulikflüssigkeit des existierenden hydrostatischen Antriebssystems in einem parallelen Kreislauf verwendet wird. Die lenkbaren Räder werden von Hydraulikmotoren angetrieben, die von einem Strömungsteilerventil parallel geschaltet werden. Die Zuführung der Hydraulikflüssigkeit erfolgt mittels der Pumpe des existierenden hydrostatischen Antriebssystems. Ein Schaltventil steht in einer Freilaufposition, in der sich die Steuerräder mit dem zurückströmenden Öl frei drehen können. Das Öl strömt dabei von jedem Motor in einer geschlossenen Ringleitung durch das Strömungsteiterventil zurück. Auf diese Weise wird der geschlossenen Ringleitung Ladedruck zur Verfügung gestellt. Aus der US 4 069 886 A ist ein Kraftfahrzeug bekannt, mit mindestens einer lenkbaren Vorderachse und mindestens einer Hinterachse, von denen mindestens eine Hinterachse über einen mechanischen Antriebsstrang antreibbar ist und mit einem, einen Steuerblock aufweisenden Hydraulikkreislauf, der zur Speisung von hydraulischen Einzelradmotoren vorgesehen ist, die an wenigstens zwei lenkbaren Vorderrädern mindestens einer der Vorderachsen angeordnet sind und zu deren Antrieb dienen, wobei in dem Hydraulikkreislauf für die wenigstens zwei lenkbaren Vorderräder der Vorderachsen ein als Sperrdifferential wirkender, durch den Steuerblock geregelter Druckölverteiler angeordnet ist, wobei entweder lediglich ein Hydraulikzulauf mit dem Druckölverteiler verbunden ist, während ein Hydraulikrücklauf unter Umgehung des Druckölverteilers unmittelbar mit dem Steuerblock verbunden ist oder lediglich der Hydraulikrücklauf mit dem Druckölverteiler verbunden ist, während der Hydraulikzulauf unter Umgehung des Druckölverteilers unmittelbar mit dem Steuerblock verbunden ist.

Es ist daher die Aufgabe der Erfindung, ein Kraftfahrzeug zu schaffen, bei dem die Antriebskraft auch bei teilweisem oder völligem Verlust der Traktion eines der hydrostatisch angetriebenen Einzelräder aufrechtzuerhalten ist und das Antriebssystem einfach und kostengünstig ausgebildet.

Diese Aufgabe wird erfindungsgemäß durch die Merkmale des Anspruchs 1 gelöst, insbesondere dadurch, dass in dem Hydraulikkreislauf für die wenigstens zwei lenkbaren Vorderräder der Vorderachsen ein als Sperrdifferential wirkender, durch den Steuerblock geregelter Druckölverteiler angeordnet ist und lediglich ein Hydraulikzulauf mit dem Druckölverteiler verbunden ist, während der Hydraulikrücklauf unter Umgehung des Druckölverteilers unmittelbar mit dem Steuerblock verbunden ist oder lediglich der Hydraulikrücklauf mit dem Druckölverteiler verbunden ist, während der Hydraulikzulauf unter Umgehung des Druckölverteilers unmittelbar mit dem Steuerblock verbunden ist.

Das der Erfindung zugrunde liegende Kraftfahrzeug, insbesondere Nutzfahrzeug weist zwei oder mehr Achsen auf, von denen wenigstens eine hintere Achse mit einem mechanischen Antriebsstrang angetrieben ist. Von den wenigstens zwei Achsen des Kraftfahrzeugs sind die Räder wenigstens einer Achse lenkbar. Im Weiteren wird beispielhaft von einem zweiachsigen Nutzfahrzeug ausgegangen, dessen hintere Achse durch den mechanischen Antriebstrang angetrieben wird und dessen vordere Achse lenkbar ist. Es ist vorstellbar, dass ein solches Nutzfahrzeug überwiegend auf festem Untergrund z. B. einer Straße mit ausreichender Traktion bewegt wird. Wird nun das Nutzfahrzeug z. B. abseits einer befestigten Straße auf einem Untergrund mit unzureichender Traktion bewegt, oder ist der Untergrund z. B. mit Schnee oder Eis bedeckt, hat der Kraftfahrzeug-Lenker die Möglichkeit, zusätzlich zu der im Normalzustand angetriebenen hinteren Achse über einen hydrostatischen Einzelradantrieb auch die lenkbaren Räder des Kraftfahrzeugs mit eigenem Antrieb zu versehen. Tritt der Fall auf, dass bei zugeschaltetem hydrostatischem Einzelradantrieb der lenkbaren Vorderräder eines der Vorderräder die Traktion gegenüber dem Untergrund ganz oder teilweise verliert, zeichnet sich der aus dem Stand der Technik bekannte hydrostatische Einzelradantrieb dadurch aus, dass die hydrostatische Antriebsleistung in dem Maß und Umfang, wie das eine der beiden hydrostatisch angetriebenen Einzelräder an Traktion einbüßt, auf das Rad mit der eingeschränkten Traktion übergeht. Die Erfindung bietet nun den Vorteil, dass durch einen im Hydraulikkreislauf angeordneten Steuerblock ein ebenfalls im Hydraulikkreislauf angeordneter Druckölverteiler die Hydraulikölmenge automatisch und/oder manuell wählbar, so auf die hydrostatisch angetriebenen Vorderräder verteilt, dass auch das über ausreichend Traktion verfügende hydrostatisch angetriebene Einzelrad ausreichende Antriebsleistung erhält, so dass die Fahrt des Nutzfahrzeugs fortgesetzt werden kann. Denkbar ist jedoch auch, die Antriebskraft über die Aufteilung der Ölmenge in jedem anderen Verhältnis auf die hydraulisch angetriebenen Einzelradmotoren zu verteilen. Vorstellbar ist, dass die die hydraulischen Einzelradmotoren parallele Konstanthydroölmotoren sind, die in den Radnaben der gelenkten Vorderachsen integriert sind. Eine radgetriebene Konstantölpumpe kann dabei über eine mechanische Übersetzung fest mit der Hinterachse verbunden sein. Sowohl die mechanische als auch die hydraulische Gesamtübersetzung ist so ausgelegt, dass zwischen den Vorder- und Hinterachsen Gleichlauf besteht. Dabei ist denkbar, dass die Hinterachse konventionell über Motor, Getriebe, Gelenkwelle und ein Hinterachsdifferential angetrieben ist. Mit Antrieb der Hinterräder erzeug die Konstantölpumpe einen hydraulischen Förderstrom im Hydraulikkreislauf, der den hydraulisch angetriebenen Einzelradmotoren zugeleitet wird. Zum Schutz vor Überdrehzahlen kann der Antrieb der Konstantölpumpe z. B. über eine Lamellen-Lastschaltkupplung geschaltet werden. Vorteilhaft ist, dass die Verteilung der Antriebskraft über den Hydraulikkreislauf im gleichmäßigen Teilungsverhältnis 50: 50 auf die hydraulischen Einzelradmotoren erfolgen kann, so dass der Druckölverteiler die funktionale Wirkung einer Differentialsperre hat. Es liegt jedoch kein mechanisches Sperrdifferential im herkömmlichen Sinne vor. Die Aufteilung der Antriebsleistung auf die hydraulischen Einzelradmotoren ist dabei druck- und viskositätsunabhängig. Vorteilhaft ist, dass für den Hydraulikkreislauf zum Abbau von Druckspitzen und zum Schutz gegenüber Leckagen Hochdruckschläuche Verwendung finden können. Ein weiterer Vorteil liegt darin, dass der Lenkeinschlag des erfindungsgemäßen Kraftfahrzeugs gegenüber einem herkömmlichen Kraftfahrzeug aus dem Stand der Technik nicht beeinträchtigt ist. Das erfindungsgemäße Kraftfahrzeug kann gleichermaßen mit einer oder mehreren Starrachsen oder mit Einzelradaufhängung ausgerüstet sein. Erfindungsgemäß ist entweder lediglich der Hydraulikzulauf mit dem Druckölverteiler verbunden, während der Hydraulikrücklauf unter Umgehung des Druckölverteilers unmittelbar mit dem Steuerblock verbunden ist oder lediglich der Hydraulikrücklauf mit dem Druckölverteiler verbunden, während der Hydraulikzulauf unter Umgehung des Druckölverteilers unmittelbar mit dem Steuerblock verbunden ist. Hierdurch wird der Einsatz eines konstruktionsmäßig einfacheren und dadurch kostengünstigeren Druckölverteilers möglich.

In einer anderen Ausführungsform der Erfindung umfasst der Hydraulikkreislauf einen Hydraulikzu- und einen Hydraulikrücklauf, die den Druckölverteiler mit den Einzelmotoren verbinden.

In einer anderen Ausführungsform der Erfindung wirkt der Druckölverteiler in Bezug auf den Hydraulikkreislauf in Vorwärtsfahrt als Mengenteiler.

In einer weiteren Ausführungsform der Erfindung wirkt der Druckölverteiler in Bezug auf den Hydraulikkreislauf in Rückwärtsfahrt als Summenteiler. Die hydrostatischen Einzelradmotoren funktionieren somit in beiden Fahrtrichtungen. Dabei wird die Ölflussrichtung im geschlossenen Hydraulickreislauf von der Fahrtrichtung der Hinterachse bestimmt. Die Konstantölpumpe und die hydraulischen Einzelradmotoren sind doppelt wirkend als Saug-Druck-Aggregate ausgelegt.

Eine weitere Ausführungsform der Erfindung zeigt, dass der eingangs zugeführte Hydraulikölstrom auf die beiden angeschlossenen Einzelradmotoren im Sinne gleicher und verschiedener Hydraulikölmengen aufteilbar ist.

Eine weitere Ausführungsform der Erfindung ist dadurch gekennzeichnet, dass der Hydraulickreislauf ein Hochdruckkreislauf ist. Die Verteilung der unter hohem Druck stehenden Ölmenge durch den Druckölverteiler auf die wenigstens zwei lenkbaren Vorderräder gewährleistet je nach Erfordernis eine gleiche oder unterschiedliche Verteilung der Antriebskraft auf die hydraulisch angetriebenen lenkbaren Vorderräder.

Eine weitere Ausführungsform der Erfindung sieht vor, dass im Hydraulikkreislauf ein Anschluss für einen Speisekreislauf vorgesehen ist. Der Anschluss kann je nach Erfordernis in eine Hydraulikleitung erfolgen und/oder z. B. in den Steuerblock oder den Druckölverteiler einmünden. Der Speisekreislauf gewährleistet eine Befüllung oder Entleerung des Hydraulikkreislaufes z. B. im Wartungsfall.

Nach einer weiteren Ausführungsform der Erfindung ist der Speisekreislauf ein Niederdrucckreislauf. Vorstellbar ist dabei, dass der Hydraulikkreislauf als Hochdruckkreislauf von einer motorgetriebenen Speisepumpe über einen Speisekreislauf versorgt wird. Dem Hydraulikkreislauf kann über ein Ausspeiseventil Öl entnommen werden, das über eine Ölkühlung zu einem Ölvorratsbehälter geleitet wird. Im Speisekreislauf kann ein Vorlauffilter, z. B. ein Druckfilter angeordnet sein. Im Speisekreislauf können Nachspeiseventile für den Ausgleich von Füllungsmängeln oder zur Kavitationsvermeidung bei Kurvenfahrt angeordnet sein.

Nach einer anderen Ausführungsform der Erfindung weist der Druckölverteiler eine integrierte Freilaufsperrenschaltung auf.

Nach einer weiteren Ausführungsform der Erfindung ist der Druckölverteiler zu- und abschaltbar.

Der Druckölverteiler ist in Abhängigkeit einer vorbestimmten Fahrgeschwindigkeit abschaltbar. Denkbar ist, dass die Zu- und Abschaltung des Druckölverteilers vom Kraftfahrzeug-Lenker über einen Ein/Aus-Schalter erfolgt und zusätzlich über ein CAN-fähiges elektronisches Steuergerät steuerbar ist. Die elektronische Steuerung gibt dabei das Zu- und Abschalten des Druckölverteilers aufgrund eines einprogrammierten Schaltprogrammes frei. Eingangssignale nämlich die Motordrehzahl, die Fahrgeschwindigkeit, die Raddrehzahlen von Vorder- und Hinterachsen, der Speisedruck, die Öltemperatur und das ABS-System werden bei der Regelung des Druckölverteilers durch den Steuerblock berücksichtigt. Denkbar ist auch, dass der Steuerblock den Speisekreislauf zu- und abschaltet. Zum Schutz vor Überdrehung ist der Konstantölpumpe z. B. eine Lamellen-Lastschaltkupplung vorgeschaltet. Vorstellbar ist, dass der Steuerblock bei Überschreiten von vorbestimmten Parametern wie z. B. der Fahrgeschwindigkeit, der Öltemperatur, dem Ausfall von Speisedruck, vorliegender Unplausibilität der Raddrehzahlen von Vorderachse/n und Hinterachse/n oder bei Aktivierung des Anti-Blockier-Systems zugeschaltet werden kann.

Nach einer weiteren Ausführungsform der Erfindung ist im Hydraulikkreislauf ein Rückschlagventil angeordnet.

Weitere vorteilhafte Ausgestaltungen und zweckmäßige Fortbildungen des erfindungsgemäßen Kraftfahrzeugs sind aus den nachstehenden Beispielsbeschreibungen anhand der Zeichnung näher entnehmbar. Hierbei zeigen:
- Fig. 1: in schematischer Darstellung ein Kraftfahrzeug nach dem Stand der Technik mit hyd- raulisch angetriebenen Einzelradmotoren,
- Fig. 2: in schematischer Darstellung ein Kraftfahrzeug mit hydraulisch angetriebenen Einzel- radmotoren und einem Druckölverteiler, das das Verständnis der Erfindung erleichtert,
- Fig. 3: ein Kraftfahrzeug entsprechend der Fig. 2 mit einem Hydraulikrücklauf und unter Um- gehung des Druckölverteilers,
- Fig. 4: ein Kraftfahrzeug entsprechend der Fig. 2 mit einem Hydraulikzulauf unter Umgehung des Druckölverteilers,
- Fig. 5: in schematischer Darstellung ein vierachsiges Fahrzeug mit unterschiedlichen Diffe- rentialsperren in verschiedenen Anordnungen und
- Fig. 6: in schematischer Darstellung ein Beispiel eines Druckölverteilers.

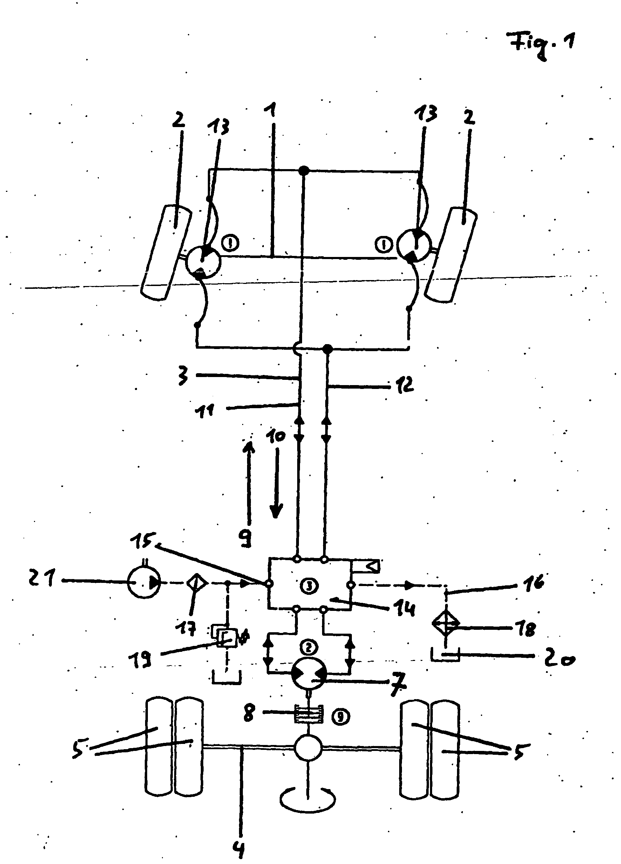

Fig. 1 zeigt in schematischer Darstellung eine vordere Achse 1 mit hydraulisch angetriebenen lenkbaren Vorderrädern 2 und einem Hydraulikkreislauf 3. Mit Bezugsziffer 4 ist eine hintere Achse bezeichnet, an der die Hinterräder 5 angeordnet sind. Der Hydraulikkreislauf 3 weist eine Hydrokonstantpumpe 7 auf, die im Beispiel der Figur 1 radgetrieben ist und über eine feste mechanische Übersetzung mit den Rädern 5 der hinteren Achse 4 verbunden ist. Zwischen der hinteren Achse 4 und der Hydrokonstantpumpe 7 ist eine Kupplung 8, bspw. eine Lamellen-Lastschaltkupplung vorgesehen. Der Hydraulikkreislauf 3 ist als geschlossener Kreislauf dargestellt, wobei die Hydrokonstantpumpe 7 in Abhängigkeit von der Vorgabe der hinteren Achse 4 in Vorwärtsrichtung 9 oder in Rückwärtsrichtung 10 angetrieben werden kann. Wird die Hydrokonstantpumpe 7 in Vorwärtsrichtung 9 angetrieben, durchströmt das Hydrauliköl den Ast 11 des Hydraulikkreislaufes 3 in Vorwärtsrichtung 9, wodurch die jeweils an den lenkbaren Vorderrädern 2 angeordneten hydraulischen Einzelradmotoren 13 in Vorwärtsrichtung 9 angetrieben werden. Der Rücklauf des Hydrauliköls erfolgt in diesem Fall über den Ast 12 des Hydraulikkreislaufes 3. Aufgrund der Tatsache, dass die Hydrokonstantpumpe 7 in Vorwärtsrichtung 9 sowie in Rückwärtsrichtung 10 betrieben werden kann, folgt, dass die beiden Äste 11, 12 des Hydraulikkreislaufes 3 wechselseitig in beiden Fahrtrichtungen 9; 10 befahren werden können. Im Hydraulikkreislauf 3 ist ein Steuerblock 14 angeordnet, der einen Anschluss 15 eines Speisekreislaufes 16 aufweist. In der Figur 1 ist dargestellt, dass im Speisekreislauf 16 ein Vorlauffilter 17, ein Ölkühler 18 und ein Speisedruckregler 19 angeordnet sind. Der Speiseölkreislauf 16 weist zusätzlich einen Öl-Vorratsbehälter 20 sowie eine Speisepumpe 21 auf. Der Hydraulikkreislauf 3 ist als geschlossener Hochdruckkreislauf dargestellt, wogegen der Speisekreislauf 16 gestrichelt als offener Niederdrucckreislauf gezeigt ist.

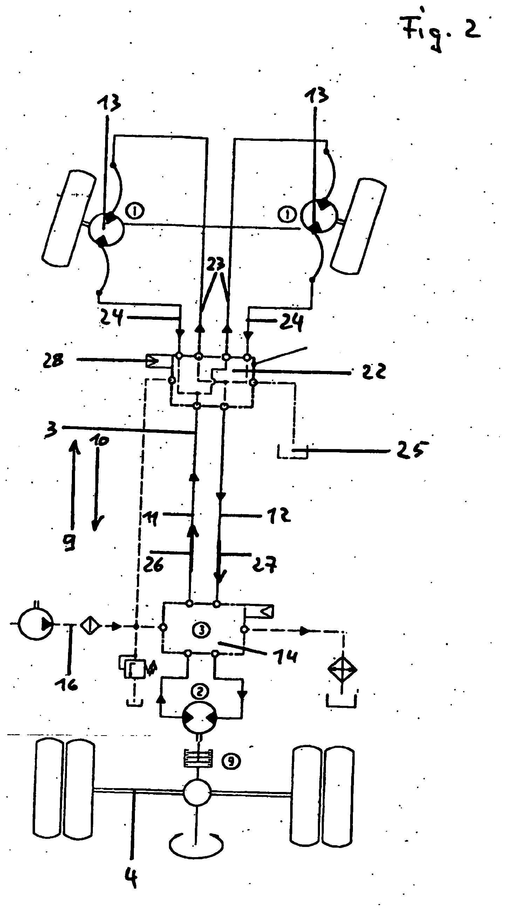

Die Fig. 2 weist gegenüber der vorhergehenden Fig. 1 den Unterschied auf, dass im Hydraulickreislauf 3 zwischen dem Steuerblock 14 und den hydraulischen Einzelradmotoren 13 ein Druckölverteiler 22 angeordnet ist. Der Druckölverteiler 22 ist mit dem Steuerblock 14 durch je einen Ast 11; 12 verbunden und steht mit jedem hydraulischen Einzelradmotor 13 über je einen Hydraulikzulauf 23 und einen Hydraulikrücklauf 24 in Verbindung. In Abhängigkeit davon, ob die hintere Achse 4 in Vorwärtsrichtung 9 oder in Rückwärtsrichtung 10 angetrieben wird, durchströmt das Hydrauliköl die Äste 11; 12 bzw. den Hydraulikzulauf 23 bzw. den Hydraulikrücklauf 24 entsprechend in Vorwärtsrichtung 9 oder in Rückwärtsrichtung 10. Im Beispiel der Fig. 2 weist der Druckölverteiler 22 im Hydraulikkreislauf 3 steuerblockseitig mit den Ästen 11; 12 je einen Zu- und einen Ablauf für das Hydrauliköl auf. Vorderachsseitig verfügt der Druckölverteiler 22 je hydraulischem Einzelradmotor 13 über einen Hydraulikzulauf 23 und einen Hydraulikrücklauf 24. Der Druckölverteiler ist an den Speisekreislauf 16 angeschlossen und weist einen weiteren Öl-Vorratsbehälter 25 auf. Die Pfeile 26 bzw. 27 zeigen die Hydraulikölflussrichtung in Vorwärtsrichtung 9. Die Strömungsrichtung (entsprechend den Pfeilen 26 bzw. 27) des Hydrauliköls verläuft bei Rückwärtsrichtung 10 jeweils in entgegengesetzter Richtung. Mit Bezugsziffer 28 ist ein Regler zur Zu- und Abschaltung des Hydraulikkreislaufes 3 und des Speisekreislaufes 16 dargestellt.

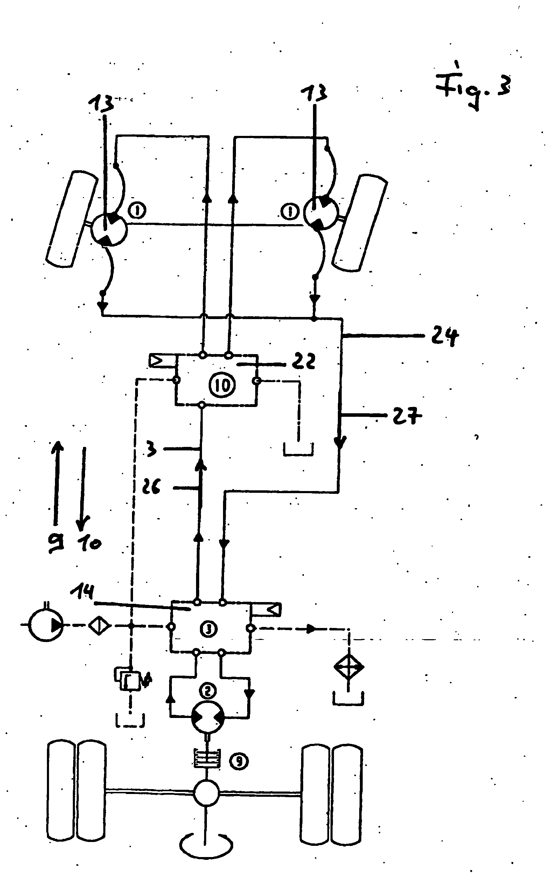

Fig. 3 unterscheidet sich von der Darstellung in Fig. 2 dergestalt, dass der Hydraulikrücklauf 24 der beiden Hydraulikeinzelradmotoren 13 zum Steuerblock 14 unter Umgehung des Druckölverteilers 22 direkt zum Steuerblock 14 verläuft. Die Fig. 3 zeigt die Funktionsweise des Druckölverteilers 22 in Vorwärtsrichtung 9. Das Hydrauliköl durchströmt den Hydraulikkreislauf 3 entsprechend der Pfeile 26; 27. Der Druckölverteiler 22 wirkt dabei im Bezug auf das Hydrauliköl als Mengenteiler.

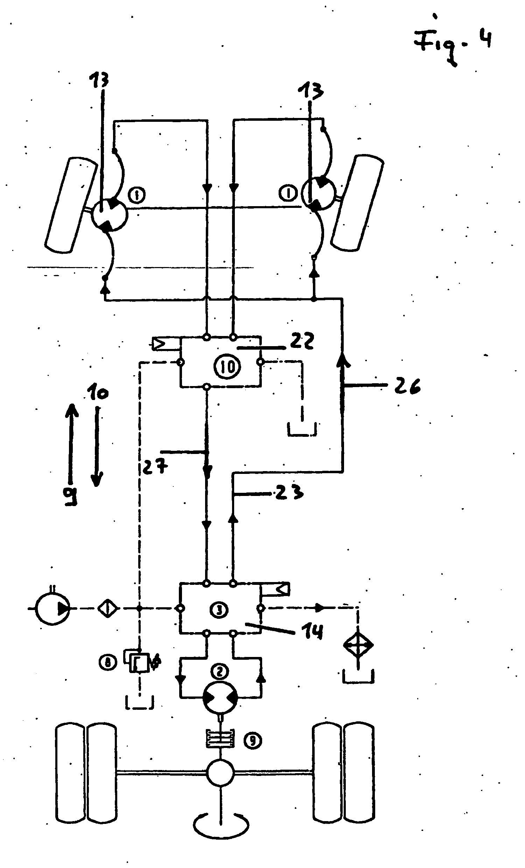

Fig. 4 zeigt die in der Fig. 3 dargestellte Ausführungsform der Erfindung mit dem Unterschied, dass der Druckölverteiler 22 in Rückwärtsrichtung 10 betrieben wird. Hierbei verläuft der Hydraulikzulauf 23 zwischen dem Steuerblock 14 und den hydraulischen Einzelradmotoren 13 unmittelbar unter Umgehung des Druckölverteilers 22. Die Strömungsrichtung des Hydrauliköls im Hydraulikkreislauf 3 wird durch die Pfeile 26; 27 dargestellt. Der Druckölverteiler 22 wirkt in Fig. 4 in Bezug auf das Hydrauliköl als Summenteiler.

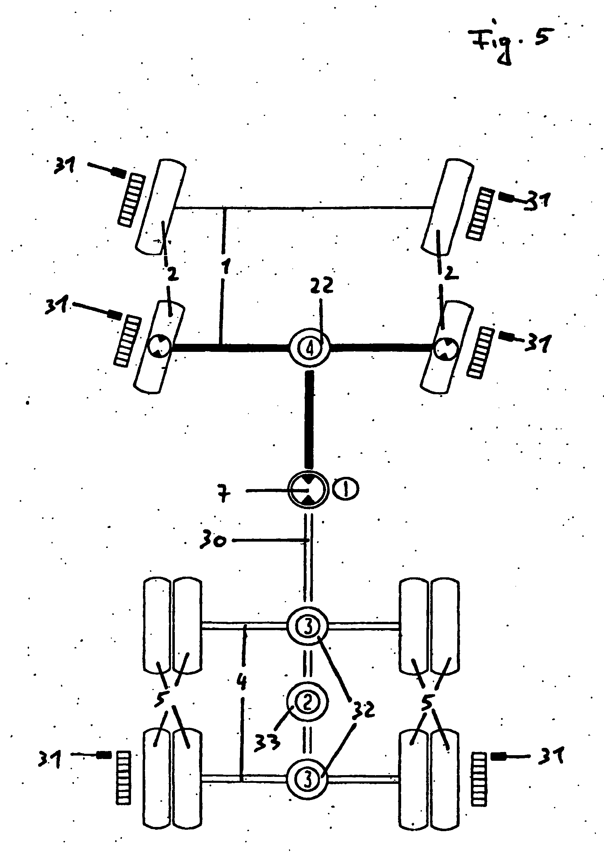

Fig. 5 zeigt in schematischer Darstellung ein Kraftfahrzeug nach Maßgabe der Erfindung mit je zwei hinteren Achsen 4 sowie zwei vorderen Achsen 1. Die hintere der beiden vorderen Achsen 1 ist mit den beiden hinteren Achsen 4 über eine Antriebswelle 30 verbunden. Die lenkbaren Vorderräder 2 sowie die Räder 5 der beiden hinteren Achsen 4 weisen jeweils ABS-Sensoren 31 auf. Zwischen den hinteren Achsen 4 und den beiden dargestellten vorderen Achsen 1 ist eine Hydrokonstantpumpe 7 eines Hydraulikkreislaufes 3 dargestellt, über den die Hydrokonstantpumpe 7 mit den beiden lenkbaren Vorderrädern 2 der Vorderachsen 1 in Verbindung steht. Zwischen den beiden lenkbaren Vorderrädern 2 der hinteren Vorderachse 1 ist ein erfindungsgemäßer Druckölverteiler 22 angeordnet. Die hinteren beiden Achsen 4 des Kraftfahrzeugs weisen jeweils herkömmliche, aus dem Stand der Technik bekannte mechanische Sperrdifferentiale 32 auf. Zwischen den beiden hinteren Achsen 4 ist eine Längssperre 33 angeordnet, die die Verteilung der Antriebskraft zwischen deren beiden mechanischen Sperrdifferentialen 32 regelt. Die in der Fig. 5 dargestellte Ausführungsformen sind in Bezug auf die Anzahl der Achsen 1;4 des Kraftfahrzeugs sowie in Bezug auf die Anordnung von Druckölverteilern 22 im Sinn der Erfindung sowie sonstigen mechanischen Sperrdifferentialen 32 keineswegs begrenzend gemeint. Neben der Darstellung der Figur 5 sind auch andere Achs- und Differentialkombinationen denkbar.

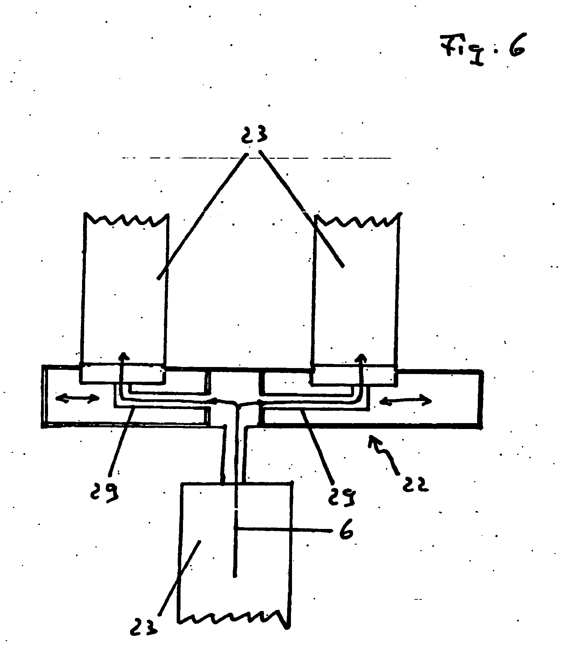

Fig. 6 zeigt den in den Druckölverteiler 22 einmündenden Hydraulikzulauf 23 mit einem Hydraulikölstrom 6. Im Druckölverteiler 22 wird der Hydraulikölstrom 6 auf zwei Hydraulikzuläufe 23 aufgeteilt. Die Schieber 29 weisen den Hydraulikzuläufen 23 im Sinne gleicher oder unterschiedlicher Leistungserzeugung an den Einzelradmotoren 13 die erforderlichen Hydraulikölmengen zu.

### Bezugszeichen

- 1: Vordere Achse
- 2: Lenkbare Vorderräder
- 3: Hydraulikkreislauf
- 4: Hintere Achse
- 5: Hinterräder
- 6:
- 7: Hydrokonstantpumpe
- 8: Kupplung
- 9: Vorwärtsrichtung
- 10: Rückwärtsrichtung
- 11: Ast
- 12: Ast
- 13: Hydraulischer Einzelradmotor
- 14: Steuerblock
- 15: Anschluss des Speisekreislaufs
- 16: Speisekreislauf
- 17: Vorlauffilter
- 18: Ölkühler
- 19: Speisedruckregler
- 20: Öl-Vorratsbehälter
- 21: Speisepumpe
- 22: Druckölverteiler
- 23: Hydraulikzulauf
- 24: Hydraulikrücklauf
- 25: Weiterer Öl-Vorratsbehälter
- 26: Pfeil - Vorwärtsrichtung
- 27: Pfeil - Rückwärtsrichtung
- 28: Regler
- 29: Gemeinsame Hydraulikleitung
- 30: Antriebswelle
- 31: ABS-Sensor
- 32: Mechanisches Sperrdifferential
- 33: Längssperre

## Patentansprüche

1. Kraftfahrzeug, nämlich Nutzfahrzeug, mit mindestens einer lenkbaren Vorderachse (1) und mindestens einer Hinterachse (4), von denen mindestens eine Hinterachse (4) über einen mechanischen Antriebsstrang antreibbar ist und mit einem, einen Steuerblock (14) aufweisenden Hydraulikkreislauf (3), der zur Speisung von hydraulischen Einzelradmotoren (13) vorgesehen ist, die an wenigstens zwei lenkbaren Vorderrädern (2) mindestens einer der Vorderachsen (1) angeordnet sind und zu deren Antrieb dienen, wobei in dem Hydraulikkreislauf (3) für die wenigstens zwei lenkbaren Vorderräder (2) der Vorderachsen (1) ein als Sperrdifferential wirkender, durch den Steuerblock (14) geregelter Druckölverteiler (22) angeordnet ist, wobei entweder lediglich ein Hydraulikzulauf (23) mit dem Druckölverteiler (22) verbunden ist, während ein Hydraulikrücklauf (24) unter Umgehung des Druckölverteilers (22) unmittelbar mit dem Steuerblock (14) verbunden ist oder lediglich der Hydraulikrücklauf (24) mit dem Druckölverteiler (22) verbunden ist, während der Hydraulikzulauf (23) unter Umgehung des Druckölverteilers (22) unmittelbar mit dem Steuerblock (14) verbunden ist, wobei der Druckölverteiler (22) in Abhängigkeit einer vorbestimmten Fahrgeschwindigkeit abschaltbar ist, wobei bei der Regelung des Druckölverteilers (22) durch den Steuerblock (14) berücksichtigt werden: Eingangssignale, umfassend eine Motordrehzahl, eine Fahrgeschwindigkeit, Raddrehzahlen von Vorder- und Hinterachsen (1, 4), ein Speisedruck, eine Öltemperatur, und ein ABS-System.

2. Kraftfahrzeug nach Anspruch 1, **dadurch gekennzeichnet, dass** der Hydraulikkreislauf (3) einen Hydraulikzu- und einen Rücklauf (23, 24) umfasst, der den Druckölverteiler (22) mit den Einzelmotoren verbindet.

3. Kraftfahrzeug nach Anspruch 1, **dadurch gekennzeichnet, dass** der Druckölverteiler (22) in Bezug auf den Hydraulikkreislauf (3) in Vorwärtsfahrt (9) als Mengenteiler wirkt.

4. Kraftfahrzeug nach Anspruch 1, **dadurch gekennzeichnet, dass** der Druckölverteiler (22) in Bezug auf den Hydraulikkreislauf (3) in Rückwärtsfahrt (10) als Summenteiler wirkt.

5. Kraftfahrzeug nach Anspruch 1, **dadurch gekennzeichnet, dass** der eingangs zugeführte Hydraulikölstrom auf die beiden angeschlossenen Einzelradmotoren im Sinne gleicher und verschiedener Hydraulikölmengen aufteilbar ist.

6. Kraftfahrzeug nach Anspruch 1, **dadurch gekennzeichnet, dass** der Hydraulikkreislauf (3) ein Hochdruckkreislauf ist.

7. Kraftfahrzeug nach Anspruch 1, **dadurch gekennzeichnet, dass** im Hydraulikkreislauf (3) ein Anschluss für einen Speisekreislauf (16) vorgesehen ist.

8. Kraftfahrzeug nach Anspruch 7, **dadurch gekennzeichnet, dass** der Speisekreislauf (16) ein Niederdruckkreislauf ist.

9. Kraftfahrzeug nach Anspruch 1, **dadurch gekennzeichnet, dass** der Druckölverteiler (22) eine integrierte Freilaufsperrenschaltung aufweist.

10. Kraftfahrzeug nach Anspruch 1, **dadurch gekennzeichnet, dass** der Druckölverteiler (22) zu- und abschaltbar ist.

11. Kraftfahrzeug nach Anspruch 1, **dadurch gekennzeichnet, dass** im Hydraulikkreislauf (3) ein Rückschlagventil angeordnet ist.

## Claims

1. Motor vehicle, namely utility vehicle, with at least one steerable front axle (1) and at least one rear axle (4), of which at least one rear axle (4) can be driven via a mechanical drive train, and with a hydraulic circuit (3) which has a control block (14) and is provided for feeding hydraulic individual wheel motors (13) which are arranged on at least two steerable front wheels (2) of at least one of the front axles (1) and serve to drive the said front wheels (2), a pressurized oil distributor (22) which is regulated by way of the control block (14) and acts as a limited slip differential being arranged in the hydraulic circuit (3) for the at least two steerable front wheels (2) of the front axles (1), either merely a hydraulic feed line (23) being connected to the pressurized oil distributor (22), whereas a hydraulic return line (24) is connected directly to the control block (14) while bypassing the pressurized oil distributor (22), or merely the hydraulic return line (24) being connected to the pressurized oil distributor (22), whereas the hydraulic feed line (23) is connected directly to the control block (14) while bypassing the pressurized oil distributor (22), it being possible for the pressurized oil distributor (22) to be switched off in a manner which is dependent on a predetermined driving speed, the following being taken into consideration in the case of the regulation of the pressurized oil distributor (22) by way of the control block (14): input signals, comprising an engine rotational speed, a driving speed, wheel rotational speeds of front and rear axles (1, 4), a feed pressure, an oil temperature, and an ABS system.

2. Motor vehicle according to Claim 1, **characterized in that** the hydraulic circuit (3) comprises a hydraulic feed and a hydraulic return line (23, 24) which connects the pressurized oil distributor (22) to the individual motors.

3. Motor vehicle according to Claim 1, **characterized in that** the pressurized oil distributor (22) acts as a flow divider in relation to the hydraulic circuit (3) during forward travel (9).

4. Motor vehicle according to Claim 1, **characterized in that** the pressurized oil distributor (22) acts as a summing divider in relation to the hydraulic circuit (3) during reverse travel (10).

5. Motor vehicle according to Claim 1, **characterized in that** the hydraulic oil stream which is fed in at the inlet can be divided among the two connected individual wheel motors in the sense of identical and different hydraulic oil quantities.

6. Motor vehicle according to Claim 1, **characterized in that** the hydraulic circuit (3) is a high-pressure circuit.

7. Motor vehicle according to Claim 1, **characterized in that** a connector for a feed circuit (16) is provided in the hydraulic circuit (3).

8. Motor vehicle according to Claim 7, **characterized in that** the feed circuit (16) is a low-pressure circuit.

9. Motor vehicle according to Claim 1, **characterized in that** the pressurized oil distributor (22) has an integrated freewheel lock circuit.

10. Motor vehicle according to Claim 1, **characterized in that** the pressurized oil distributor (22) can be switched on and off.

11. Motor vehicle according to Claim 1, **characterized in that** a check valve is arranged in the hydraulic circuit (3) .

## Revendications

1. Véhicule automobile, en particulier véhicule utilitaire, comprenant au moins un essieu avant dirigeable (1) et au moins un essieu arrière (4), dont au moins un essieu arrière (4) peut être entraîné par le biais d'une chaîne cinématique mécanique, et comprenant un circuit hydraulique (3) présentant un bloc commande (14), qui est prévu pour l'alimentation de moteurs de roues hydrauliques indépendants (13), qui sont disposés sur au moins deux roues avant dirigeables (2) d'au moins l'un des essieux avant (1) et qui servent à leur entraînement, un distributeur d'huile sous pression (22) régulé par le bloc commande (14), servant de différentiel de blocage, étant disposé dans le circuit hydraulique (3) pour les au moins deux roues avant dirigeables (2) des essieux avant (1), soit seulement une alimentation hydraulique (23) étant connectée au distributeur d'huile sous pression (22) tandis qu'un retour hydraulique (24) est connecté directement au bloc commande (14) en contournant le distributeur d'huile sous pression (22), soit seulement le retour hydraulique (24) étant connecté au distributeur d'huile sous pression (22) tandis que l'alimentation hydraulique (23) est connectée directement au bloc commande (14) en contournant le distributeur d'huile sous pression (22), le distributeur d'huile sous pression (22) pouvant être arrêté en fonction d'une vitesse de conduite prédéterminée, et lors de la régulation du distributeur d'huile sous pression (22) par le bloc commande (14), les points suivants étant pris en compte : des signaux d'entrée comprenant un régime du moteur, une vitesse de conduite, des vitesses de rotation des roues des essieux avant et arrière (1, 4), une pression d'alimentation, une température de l'huile et un système ABS.

2. Véhicule automobile selon la revendication 1, **caractérisé en ce que** le circuit hydraulique (3) comprend une alimentation hydraulique et un retour (23, 24), qui relie le distributeur d'huile sous pression (22) aux moteurs indépendants.

3. Véhicule automobile selon la revendication 1, **caractérisé en ce que** le distributeur d'huile sous pression (22) agit en tant que distributeur diviseur par rapport au circuit hydraulique (3) en conduite en marche avant (9).

4. Véhicule automobile selon la revendication 1, **caractérisé en ce que** le distributeur d'huile sous pression (22) agit en tant que distributeur additionneur par rapport au circuit hydraulique (3) en conduite en marche arrière (10).

5. Véhicule automobile selon la revendication 1, **caractérisé en ce que** le flux d'huile hydraulique acheminé à l'entrée aux deux moteurs de roues indépendants raccordés peut être divisé pour obtenir des quantités d'huile hydraulique identiques et différentes.

6. Véhicule automobile selon la revendication 1, **caractérisé en ce que** le circuit hydraulique (3) est un circuit haute pression.

7. Véhicule automobile selon la revendication 1, **caractérisé en ce qu'**un raccord pour un circuit d'alimentation (16) est prévu dans le circuit hydraulique (3).

8. véhicule automobile selon la revendication 7, **caractérisé en ce que** le circuit d'alimentation (16) est un circuit basse pression.

9. Véhicule automobile selon la revendication 1, **caractérisé en ce que** le distributeur d'huile sous pression (22) présente un circuit de blocage de roue libre intégré.

10. Véhicule automobile selon la revendication 1, **caractérisé en ce que** le distributeur d'huile sous pression (22) peut être mis en marche et arrêté.

11. Véhicule automobile selon la revendication 1, **caractérisé en ce qu'**un clapet anti-retour est disposé dans le circuit hydraulique (3).
